# FASCICULE DE BREVET EUROPEEN

(11) **EP 0 569 267 B1**
(45) Date de publication et mention de la délivrance du brevet: **17.07.1996**
(21) Numéro de dépôt: 93401069.5
(22) Date de dépôt: 23.04.1993
(51) Int. Cl.: B60K 5/12, F16F 13/00

(54) **Agencement pour la suspension d'un moteur de véhicule automobile**
Einrichtung zur Lagerung eines Kraftfahrzeugmotors
Arrangement for the suspension of an automotive vehicle engine

(30) Priorité: 06.05.1992 FR 9205592
(43) Date de publication de la demande: 10.11.1993
(73) Titulaire: AUTOMOBILES PEUGEOT, F-75116 Paris (FR); AUTOMOBILES CITROEN, F-92200 Neuilly sur Seine (FR)
(72) Inventeur: Froumajou, Armand, F-95110 Sannois (FR)
(74) Mandataire: Polus, Camille

(56) Documents cités:
- EP-A- 0 490 717
- DE-A- 2 737 985
- FR-A- 2 507 976

## Description

La présente invention concerne un agencement pour la suspension d'un ensemble par rapport à un autre du type comportant un support hydroélastique destiné à être interposé entre les deux ensembles.

L'invention concerne plus particulièrement un agencement pour la suspension d'un moteur de véhicule automobile par rapport à la structure de la caisse du véhicule.

Le document FR-A-2.364.373 décrit et représente un agencement pour la suspension d'une machine tournante telle que par exemple un moteur à combustion interne, par rapport à une structure fixe, du type comportant un support hydroélastique comprenant deux armatures reliées respectivement aux deux ensembles, ces deux armatures étant réunies par une masse de matériau élastomère, le support comportant au moins une chambre de travail délimitée au moins en partie par la masse en matériau élastomère et une chambre d'expansion, ces deux chambres étant remplies au moins partiellement de liquide et reliées entre elles par un passage de communication, et du type dans lequel la chambre de travail est également délimitée en partie par une paroi en matériau élastique et sur la face extérieure de laquelle agit un organe d'actionnement de la paroi élastique qui applique à cette dernière des déplacements alternatifs commandes de manière à créer dans la chambre de travail des forces de pression synchrones avec les harmoniques des vibrations de la machine tournante.

Dans ce document, la face extérieure de la membrane mobile comporte un poussoir avec lequel coopère une came d'un dispositif d'actionnement de la paroi élastique.

L'agencement décrit et représenté dans ce document est de conception particulièrement complexe, ce document ne proposant par ailleurs aucune solution industrialisable en grande série permettant d'assurer la suspension d'un groupe motopropulseur par rapport à la caisse d'un véhicule automobile. L'agencement de suspension décrit dans ce document nécessite notamment des opérations de fixation et de raccordement de différents composants qui viennent s'ajouter aux opérations de fixation des deux ensembles à suspendre l'un par rapport à l'autre sur les deux armatures du support hydroélastique.

Afin de remédier à ces inconvénients, il a déjà été proposé dans la demande de brevet français FR-A-2 670 261 de prévoir que l'axe d'entraînement en rotation de la came est monté tournant dans un palier rapporté sur l'une des deux armatures du support hydroélastique. Cette conception est plus simple que la précédente mais elle nécessite d'assurer le montage du couvercle formant palier sur l'une des armatures du support hydroélastique puis, après avoir relié les deux armatures du support au groupe motopropulseur et à la caisse du véhicule, une opération supplémentaire, visant à relier l'arbre d'entraînement en rotation de la came à un organe tournant du moteur.

L'invention a pour but de proposer un agencement de suspension du type comportant un support hydroélastique du type mentionné précédemment, qui soit de conception particulièrement simple et dont les opérations de montage soient réduites au minimum.

Dans ce but, l'invention propose un agencement de suspension, caractérisé en ce qu'il comporte un bras de liaison rigide fixé à l'une des deux armatures du support hydroélastique et à l'un des deux ensembles à suspendre et qui porte l'organe d'actionnement de la paroi élastique et des moyens d'entraînement de l'organe d'actionnement qui coopèrent avec un organe moteur dudit ensemble qui est animé d'un mouvement cyclique.

Selon d'autres caractéristiques de l'invention :
- les moyens d'actionnement comportent un arbre monté à rotation dans le bras de liaison, dont la première extrémité coopère avec l'organe moteur et dont la seconde extrémité est reliée à l'organe d'actionnement de la paroi élastique ;
- l'organe moteur est une came qui coopère avec un organe suiveur de came relié à la première extrémité de l'arbre et qui transmet à ce dernier un mouvement d'oscillation autour de son axe, la seconde extrémité de l'arbre comportant un doigt radial dont l'extrémité libre agit sur la face extérieure de la membrane mobile ;
- l'organe suiveur de came est un galet monté tournant à l'extrémité d'un levier radial d'entraînement de l'arbre ;
- l'agencement comporte des moyens élastiques qui sollicitent le galet en contact avec la came ;
- l'arbre oscillant s'étend selon une direction sensiblement perpendiculaire à la direction générale de déplacement de la paroi élastique ;
- l'arbre est monté oscillant par rapport au bras de liaison par l'intermédiaire de paliers déformables élastiquement en torsion ;
- le bras de liaison est une pièce moulée comportant à ses extrémités opposées des brides de fixation sur ladite armature et sur un support fixe dudit ensemble ;
- les deux brides s'étendent dans des plans sensiblement perpendiculaires à la direction de sollicitation de la paroi mobile.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective éclatée d'un agencement de suspension réalisé conformément aux enseignements de l'invention ;
- la figure 2 est une vue en bout selon la flèche F de la figure 1 de l'agencement de suspension illustré en position assemblée.

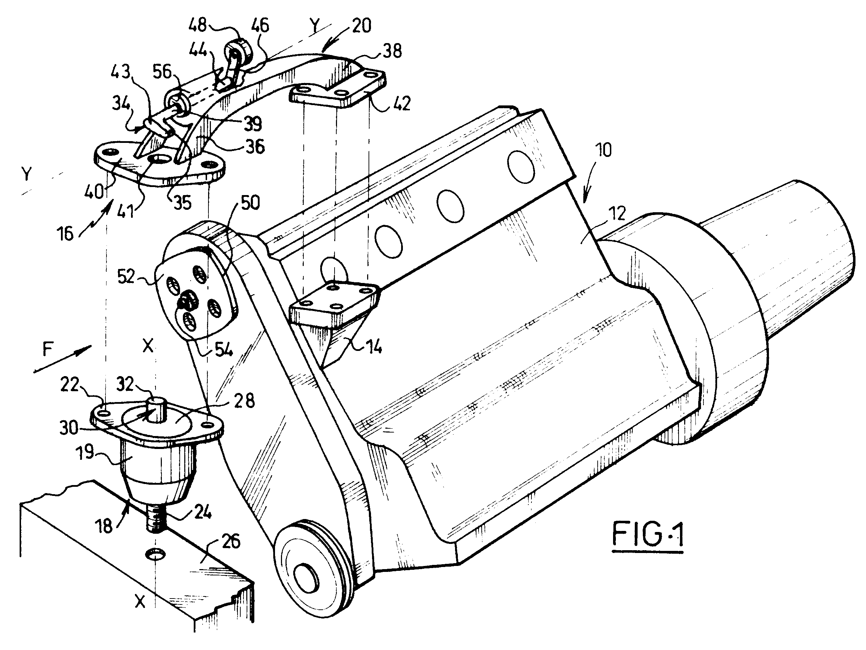

On a représenté de manière schématique à la figure 1 un groupe motopropulseur 10 comportant un bloc-cylindres 12 d'un moteur à combusion interne à quatre cylindres à arbres à cames en tête qui comporte un support fixe réalisé sous la forme d'une patte 14 qui est prévue pour permettre la fixation du groupe motopropulseur dans le compartiment moteur d'un véhicule automobile en reliant le support fixe 14 à un élément de structure de la caisse du véhicule au moyen d'un agencement de suspension 16 réalisé conformément aux enseignements de l'invention.

L'agencement de suspension comprend pour l'essentiel un support hydroélastique 18 et un bras de liaison 20.

Le support hydroélastique 18 est du type connu, de sorte que son agencement intérieur n'a pas été représenté. Pour en connaître la structure détaillée et le mode de fonctionnement, on pourra se reporter, par exemple, aux documents mentionnés précédemment ainsi qu'à la demande de brevet FR 90 15 439.

Le support hydroélastique 18 comporte notamment deux armatures munies chacune de moyens de fixation.

La première armature 19 comporte une bride de fixation 22 tandis que la seconde armature (non représentée) comporte une tige filetée 24.

La bride de fixation 22 est prévue pour être reliée au groupe motopropulseur 10 tandis que la tige filetée 24 est prévue pour être reçue dans un orifice d'un élément de structure 26 de la caisse du véhicule.

Le support hydroélastique 18 est du type comportant, comme il est connu, une chambre de travail et une chambre d'expansion communiquant au moyen d'un conduit, l'une de ces chambres étant délimitée, au moins partiellement, par une paroi 28 déformable élastiquement.

La face supérieure de la paroi 28 comporte, dans le mode de réalisation illustré aux figures, un poussoir 30 qui fait saillie verticalement au-dessus du plan de la bride 22 et sur la face supérieure 32 duquel agit un organe d'actionnement 34 de manière à appliquer à la paroi élastique des déplacements alternatifs selon la direction X-X de sollicitation du support.

Le bras de liaison 20 est une pièce d'une grande rigidité réalisée par moulage dont les deux extrémités axiales opposées 36 et 38 comportent chacune une bride de fixation 40 et 42 qui sont prévues respectivement pour être fixées sur la bride 22 de l'armature 20 et sur le support fixe 14 du groupe motopropulseur. La fixation du bras de liaison rigide 20 est par exemple assurée par des liaisons filetées non représentées. La bride 40 comporte un trou 41 pour le passage du poussoir 30.

Outre sa fonction de bras de liaison rigide, la pièce moulée 20 intègre les moyens d'actionnement du poussoir 30.

Les moyens d'actionnement sont constitués par un doigt 34 qui s'étend radialement depuis une première extrémité 43 d'un arbre d'entraînement 39 monté à rotation dans le bras de liaison 20.

L'extrémité libre 35 du doigt radial d'actionnement 34 est prévue pour coopérer avec la face supérieure 32 du poussoir 30.

La seconde extrémité 44 de l'arbre d'entraînement 40 comporte un levier radial 46 à l'extrémité duquel un galet 48 est monté fou autour d'un axe parallèle à l'axe Y-Y de l'arbre 39.

La surface cylindrique du galet 48 est prévue pour coopérer avec la tranche 50 d'une came 52 qui, dans le mode de réalisation illustré aux figures, est montée à l'extrémité 54 d'un arbre à cames du moteur à combustion interne 12.

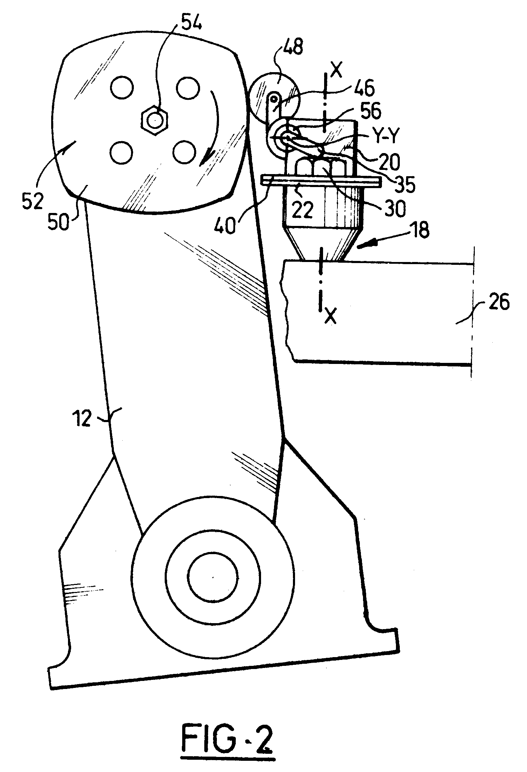

Comme on peut le constater à la figure 2, les directions radiales dans lesquelles s'étendent respectivement le doigt d'actionnement 34 et le levier support de galet 46 sont décalées angulairement l'une par rapport à l'autre de façon que l'extrémité libre 35 soit en contact avec la face supérieure du poussoir 30 et que la tranche du galet 48 soit en contact avec la tranche 50 de la came 52.

Dans la position montée illustrée à la figure 2, l'axe Y-Y d'oscillation de l'arbre d'entraînement 39 du doigt d'actionnement 34 s'étend selon une direction sensiblement perpendiculaire à la direction X-X de sollicitation du support hydroélastique 18.

La rotation de la came 52, qui est ici une came à quatre lobes, provoque une oscillation alternée de l'arbre d'entraînement 39 autour de son axe, et donc une oscillation du doigt d'actionnement 34 qui applique à la paroi élastique du support hydroélastique 18 des déplacements alternatifs commandés selon la direction X-X.

Les opérations de montage et de fixation du groupe motopropulseur 10 au moyen d'un agencement de suspension selon l'invention sont particulièrement simples.

En effet, l'opérateur commence par monter le support hydroélastique 18 sur l'élément de structure 26 de la caisse du véhicule.

Le groupe motopropulseur est ensuite introduit dans le compartiment moteur, par exemple par le dessous. Il ne reste plus à l'opérateur qu'à venir fixer le bras de liaison 20 au moyen de ses deux brides 40 et 42 par des liaisons filetées.

A l'issue de ces opérations, le groupe motopropulseur est monté sur la caisse du véhicule avec interposition du support hydroélastique 18 et les moyens d'actionnement de la paroi élastique 28 ont été simultanément mis en place sans nécessiter d'autres interventions de raccordement mécanique ou hydraulique.

Le mode de réalisation illustré aux figures dans lequel les deux brides 40 et 42 s'étendent dans des plans perpendiculaires à l'axe général du support hydroélastique 18 permettent avantageusement d'envisager l'automatisation des opérations de montage et de fixation, notamment à l'aide d'un robot.

Les moyens d'actionnement de la paroi élastique, intégrés au bras de liaison 20 qui viennent d'être décrits sont également d'une conception particulièrement simple et avantageuse dans la mesure où l'arbre d'entraînement 39 n'est soumis qu'à un mouvement d'oscillation d'amplitude limitée autour de son axe Y-Y. Il n'est donc pas nécessaire de prévoir des paliers de guidage en rotation coûteux comportant notamment des roulements à billes.

Dans un mode de réalisation particulièrement simple, il suffit de prévoir des paliers 56 en matériau élastomère déformable en torsion qui sont agencés entre l'arbre d'entraînement 39 et l'alésage correspondant formé dans le bras de liaison 20.

Cette conception est peu coûteuse à réaliser et ne nécessite ultérieurement aucun entretien ni graissage de paliers.

Selon un perfectionnement qui n'a pas été illustré sur les figures, il est possible de prévoir des moyens élastiques de rappel pour maintenir le galet 48 en contact avec la tranche 50 de la came 52, ces moyens élastiques pouvant être par exemple agencés entre le levier 46 et le bras de liaison 20.

La conception du support hydroélastique 18 est également particulièrement simple dans la mesure où il suffit de prévoir une bride de fixation 22 en l'absence de tout élément supplémentaire tel que par exemple un couvercle formant support de palier.

## Revendications

1. Agencement (16) pour la suspension d'un ensemble (10, 12) par rapport à un autre (26), notamment pour la suspension d'un moteur de véhicule automobile par rapport à la structure de la caisse du véhicule, comportant un support hydroélastique (18) du type comprenant deux armatures reliées respectivement aux deux ensembles, et au moins une chambre de travail délimitée en partie par une paroi en matériau élastique sur la face extérieure (28) de laquelle agit un organe (34) d'actionnement de la paroi élastique (28) qui applique à cette dernière des déplacements alternatifs commandés de manière à créer dans la chambre de travail des forces de pression synchrones avec les harmoniques de vibrations de l'un (12) des deux ensembles, caractérisé en ce qu'il comporte un bras de liaison rigide (20) fixé à l'une (19) des deux armatures et à l'un (12) des deux ensembles et qui porte l'organe d'actionnement (34) de la paroi élastique (28) et des moyens (39, 48) d'entraînement de l'organe d'actionnement (34) qui coopèrent avec un organe moteur (52) dudit ensemble (12) qui est animé d'un mouvement cyclique.

2. Agencement de suspension selon la revendication 1, caractérisé en ce que les moyens d'entraînement comportent un arbre (39) monté à rotation dans le bras de liaison (20), dont la première extrémité (44) coopère avec ledit organe moteur (52) et dont la seconde extrémité (43) est reliée à l'organe d'actionnement (34).

3. Agencement selon la revendication 2, caractérisé en ce que l'organe moteur (52) est une came qui coopère avec un galet (48) suiveur de came relié à la première extrémité (44) de l'arbre (39) et qui transmet à ce dernier un mouvement d'oscillation autour de son axe (Y-Y), et en ce que la seconde extrémité (43) de l'arbre oscillant (39) comporte un doigt radial (34) dont l'extrémité libre (35) agit sur la face extérieure de la membrane (28, 30).

4. Agencement selon la revendication 3, caractérisé en ce que l'organe suiveur de came (48) est un galet monté tournant à l'extrémité d'un levier radial (46) d'entraînement de l'arbre (39).

5. Agencement selon la revendication 4, caractérisé en ce qu'il comporte des moyens élastiques qui sollicitent le galet (48) en contact avec la came (50, 52).

6. Agencement selon l'une quelconque des revendications 3 à 5, caractérisé en ce que l'arbre (39) s'étend selon une direction (Y-Y) sensiblement perpendiculaire à la direction générale (X-X) de déplacement de la paroi élastique (28).

7. Agencement selon l'une quelconque des revendications 3 à 6, caractérisé en ce que l'arbre (39) est monté oscillant dans le bras de liaison (20) par l'intermédiaire de paliers déformables élastiquement en torsion (56).

8. Agencement selon l'une quelconque des revendications précédentes, caractérisé en ce que le bras de liaison (20) est une pièce moulée comportant à ses extrémités opposées (36, 38) des brides de fixation (40, 42) respectivement sur ladite armature (19, 22) et sur un support fixe (14) dudit ensemble (12).

9. Agencement selon la revendication 8 prise en combinaison avec la revendication 6, caractérisé en ce que les deux brides (40, 42) s'étendent dans des plans perpendiculaires à la direction (X-X) de sollicitation du support hydroélastique.

## Claims

1. Arrangement (16) for suspension of one assembly (10, 12) with respect to another (26), particularly for suspension of an automobile engine with respect to the structure of the vehicle bodywork, comprising a hydroelastic support (18) of the type comprising two reinforcements respectively connected to the two assemblies, and at least one work chamber defined in part by a wall of resilient material, on the external face (28) of which there acts an actuating member (34) of the resilient wall (28), which applies to the latter controlled alternating displacements so as to create in the work chamber forces of pressure synchronous with the harmonics of the vibrations of one (12) of the two assemblies, characterised in that it comprises a rigid connector arm (20) fixed to one (19) of the two reinforcements and to one (12) of the two assemblies, and which carries the actuating unit (34) of the resilient wall (28) and means (39, 48) of entrainment of the actuating member (34), which co-operate with a motive unit (52) of the said assembly (12) and to which a cyclic movement is imparted.

2. Suspension arrangement according to Claim 1, characterised in that the entrainment means comprise a shaft (39) rotatably mounted in the connector arm (20), the first end (44) of which co-operates with the said motive unit (52), and the second end (43) of which is connected to the actuating member (34).

3. Arrangement according to Claim 1, characterised in that the motive unit (52) is a cam which co-operates with a cam follower roller (48) connected to the first end (44) of the shaft (39), and which transmits to the latter an oscillatory movement about its axis (Y-Y), and in that the second end (43) of the oscillating shaft (39) comprises a radial pin (34), the free end (35) of which acts on the external face of the membrane (28,30).

4. Arrangement according to claim 3, characterised in that the cam follower member (48) is a roller mounted to rotate at the end of a radial lever (46) for entrainment of the shaft (39).

5. Arrangement according to claim 4, characterised in that it comprises resilient means which urge the roller (48) into contact with the cam (50, 52).

6. Arrangement according to any one of Claims 3 to 5, characterised in that the shaft (39) extends in a direction (Y-Y) substantially perpendicular to the general direction (X-X) of displacement of the resilient wall (28).

7. Arrangement according to any one of Claims 3 to 6, characterized in that the shaft (39) is mounted to oscillate in the connector arm (20) through the intermediary of bearings (56) which are resiliently deformable under torsion.

8. Arrangement according to any one of the preceding Claims, characterised in that the connector arm (20) is a cast part comprising at its opposed ends (36, 38) securing flanges (40, 42) respectively on the said reinforcement (19, 22) and on a fixed support (14) of the said assembly (12).

9. Arrangement according to Claim 8, taken in combination with Claim 6, characterised in that the two flanges (40, 42) extend in planes perpendicular to the direction (X-X) in which the hydroelastic support is urged.

## Patentansprüche

1. Einrichtung (16) zur Aufhängung einer Einheit (10, 12) an einer anderen (26) insbesondere für die Aufhängung eines Kraftfahrzeugmotors an der Struktur der Karosserie des Fahrzeugs, umfassend einen hydroelastischen Träger (18), der zwei jeweils mit einer der beiden Einheiten verbundenen Armaturen und mindestens eine Arbeitskammer aufweist, die zum Teil durch eine Wand aus elastischem Werkstoff abgegrenzt ist, auf deren Außenseite (28) ein Organ (34) zur Betätigung der elastischen Wand (28) einwirkt, das auf diese Hin- und Herbewegungen überträgt, die so gesteuert sind, daß in der Arbeitskammer Druckkräfte erzeugt werden, die mit den Oberschwingungen von Schwingungen einer (12) der beiden Einheiten synchron sind, dadurch gekennzeichnet, daß sie einen starren Verbindungsarm (20) besitzt, der an einer (19) der beiden Armaturen und einer (12) der beiden Einheiten befestigt ist und das Organ (34) zur Betätigung der elastischen Wand (28) und Mittel (39, 48) zum Antrieb des Betätigungsorgans (34) trägt, die mit einem eine zyklische Bewegung ausführenden Antriebsorgan (52) dieser Einheit (12) zusammenwirken.

2. Aufhängungseinrichtung nach Anspruch 1, dadurch gekennzeichnet, daß die Antriebsmittel eine drehbar in dem Verbindungsarm (20) montierte Welle (39) aufweisen, deren erstes Ende (44) mit diesem Antriebsorgan (52) zusammenwirkt und deren zweites Ende (43) mit dem Betätigungsorgan (34) verbunden ist.

3. Einrichtung nach Anspruch 2, dadurch gekennzeichnet, daß das Antriebsorgan (52) eine Kurvenscheibe ist, die mit einer der Kurvenscheibe folgenden Rolle (48) zusammenwirkt, die mit dem ersten Ende (44) der Welle (39) verbunden ist und auf diese eine Schwingbewegung um ihre Achse (Y-Y) überträgt, und daß das zweite Ende (43) der schwingenden Welle (39) einen radialen Daumen (34) aufweist, dessen freies Ende (35) auf die Außenseite der Membran (28, 30) einwirkt.

4. Einrichtung nach Anspruch 3, dadurch gekennzeichnet, daß das der Kurvenscheibe folgende Organ (48) eine Rolle ist, die drehbar am Ende eines die Welle (39) antreibenden radialen Hebels (46) montiert ist.

5. Einrichtung nach Anspruch 4, dadurch gekennzeichnet, daß sie elastische Mittel aufweist, die die Rolle (48) in Kontakt mit der Kurvenscheibe (50, 52) drängen.

6. Einrichtung nach einem der Ansprüche 3 bis 5, dadurch gekennzeichnet, daß sich die Welle (39) in einer Richtung (Y-Y) erstreckt, die zur allgemeinen Bewegungsrichtung (X-X) der elastischen Wand (28) im wesentlichen senkrecht ist.

7. Einrichtung nach einem der Ansprüche 3 bis 6, dadurch gekennzeichnet, daß die Welle (39) in dem Verbindungsarm (20) über Lager (56) schwingend montiert ist, die bezüglich Torsion elastisch verformbar sind.

8. Einrichtung nach einem der vorhergehenden Ansprüche, dadurch gekennzeichnet, daß der Verbindungsarm (20) ein Gußteil ist, das an seinen entgegengesetzten Enden (36, 38) Flansche (40, 42) zur Befestigung an dieser Armatur (19, 22) bzw. an einem feststehenden Träger (14) dieser Einheit (12) aufweist.

9. Einrichtung nach Anspruch 8 in Verbindung mit Anspruch 6, dadurch gekennzeichnet, daß sich die beiden Flansche (40, 42) in zur Belastungsrichtung (X-X) des hydroelastischen Trägers senkrechten Ebenen erstrecken.
